# EUROPEAN PATENT SPECIFICATION

(11) **EP 2 867 605 B1**
(45) Date of publication and mention of the grant of the patent: **17.10.2018**
(21) Application number: 13733417.3
(22) Date of filing: 25.06.2013
(51) Int. Cl.: F28F 21/06, F28F 1/00, B29C 70/86, B29C 33/48, B29C 33/52

(54) **COMPOSITE INTEGRATED HEAT EXCHANGER DEVICE**
INTEGRIERTE VERBUNDWÄRMETAUSCHERVORRICHTUNG
DISPOSITIF ÉCHANGEUR DE CHALEUR COMPOSITE INTÉGRÉ

(30) Priority: 29.06.2012 GB 201211533
(43) Date of publication of application: 06.05.2015
(73) Proprietor: BAE Systems PLC, London SW1Y 5AD (GB)
(72) Inventor: HUCKER, Martyn John, Bristol South Gloucestershire BS34 7QW (GB); REW, Jason Karl, Bristol South Gloucestershire BS34 7QW (GB); DUNLEAVY, Michael, Bristol South Gloucestershire BS34 7QW (GB); HAQ, Sajad, South Gloucestershire BS34 7QW (GB)
(74) Representative: BAE SYSTEMS plc Group IP Department
(86) International application number: PCT/GB2013/051666
(87) International publication number: WO 2014/001779

(56) References cited:
- WO-A1-00/56517
- WO-A1-01/00391
- WO-A1-03/107364
- DE-A1- 10 234 212
- GB-A- 1 503 250
- JP-A- 2002 120 310
- US-A- 5 542 471
- US-A- 5 807 454
- US-A1- 2010 282 442

## Description

The invention relates to a composite integrated heat exchanger device more preferably to a structural integrated heat exchanger which may be used for replacement panels on vehicles, vessels or crafts.

Such composite integrated heat exchanger device is known for instance from document US 5 542 471 A.

Heat exchangers are systems that are designed to transfer heat between two different media. There are numerous types of heat exchangers, typically there is a heat exchanging medium which may be a solid, or a fluid which transfers the heat from a first region to a second region.

According to a first aspect of the invention there is provided a composite integrated heat exchanger device comprising, at least one fibre ply, wherein said ply is substantially encapsulated in a cured binder matrix to form a fibre reinforced polymer composite, wherein said device comprises at least one elongate void which comprises at least one heat exchanging medium, wherein the fibre reinforced polymer composite has a first surface through which heat is to be transferred, and a second surface which is to be substantially non heat transferring, further comprising at least one thermally non-conductive layer located between the at least one elongate void and said second surface.

Preferably the device is a structural composite heat exchanger, where the device may be used to replace an equivalent structural metal or structural composite panel. Fibre reinforced polymer composites (FRPC) are finding increased use in structures or as replacement panels, such as, for example replacement panels on vehicles, vessels or crafts, to provide lighter and stronger materials than conventional metal panels. Metals are good thermal conductors, and so dissipating excess heat may be readily achieved by applying cooling fins or using a heat exchanger on a portion of the metal panel.

However, FRPCs are poor thermal conductors of heat, and so continued localised heating may cause localised damage to the material. Therefore, if an entire structure is formed from substantially all FRPC material, there is restricted natural heat dissipation by conduction to cooler parts of the structure or via radiative heat transfer. In a conventional metal panelled structure, heat may be transferred between two regions by use of a heat exchanger system, or by simple conduction to the cooler metal panels.

The at least one elongate void may be filled with a static heat exchanging medium or a dynamic heat exchanging medium such as, for example a heat exchanging fluid, which may be flowed through said elongate void.

The static heat exchanging medium may be selected from any material that undergoes a phase change, during which process the phase change is exothermic or endothermic depending on the required thermal transfer effect on the composite device. For example, low melt metals and alloys, waxes, polymers, may be provided as a solid within the elongate void. Whereupon being subjected to a heat source they take in latent heat from the surroundings, such that the melting process causes heat to be drawn away from the composite device. The solid heat exchanging medium may be provided as a bulk solid substantially filing the elongate void, a foamed material to provide a large volume with a low mass or a surface coating on the internal surface of the elongate void. The use of foams and surface coatings may provide a low mass heat exchanging medium. If there is a significant increase in volume upon phase change there may need to be portions of the elongate void which are dedicated to capturing excess heat exchanging medium. The use of static heat exchanging medium may not be ideally suited to liquid to gas phase changes due to the large increase in volumes.

The use of a static solid/liquid heat exchanging medium allows a low maintenance system, and facile connection between adjoining composite devices. The solid heat exchanging medium may also be used to provide heat to the device. If the solid heat exchanging medium is a metal or alloy it may simply be heated via resistive heating. Solid waxes and polymers may be heated i.e. caused to melt by applying heat to a portion of the system, or using an embedded wire or metal surface coating on the elongate void to provide resistive heating to the solid heat exchanging medium. The composite device may be substantially sealed where the static heat exchanging device is selected from a material which undergoes a phase change to ensure that the static heat exchange medium does not leave the composite device.

The heat exchanging medium may be a heat exchanging fluid. The heat exchanging fluid may be selected from any suitable fluid, such as a gas or liquid, which can transfer heat. The actual means of heat transfer through the FRPC may be selected from a simple forced flow of a heated or cooled fluid or a phase change system, such as that typically used in refrigeration systems. A dynamic i.e. use of a flowed heat exchanging fluid may provide higher rates thermal transfer than solid heat exchanging mediums, but may require further heat exchangers or pipe work to provide a final system.

The device according to the invention provides a means of transferring heat within a FRPC material. The transfer of heat may be transferring excess heat away from the panel, by applying cooling such that a panel at an elevated temperature is caused to reduce to a lower temperature. Alternatively the transfer of heat may be applying heating to a panel which is at a low temperature and causing the temperature of the panel to rise to a higher temperature.

It may be desirable to remove excess heat from a portion of a fibre reinforced panel on an aircraft or vehicle, where friction heating occurs due to rapid movement within air. Alternatively, where there is a risk of icing or freezing, it may be desirable to transfer heat into the composite, to prevent damage to the composite or prevent the formation of ice crystals on a surface, which may alter the aerodynamics of the wing.

The binder matrix may be selected from any commonly used resin binder or ceramic binder for fibre reinforced polymer composite manufacture, such as, for example, an epoxy resin or alumina.

In a highly preferred arrangement there is a plurality of at least one fibre plys, so as to provide significant structural strength to the final panel. The at least one fibre ply may be a standard fibre ply which can be used with a separate binder matrix, such as, for example, a liquid resin or ceramic. Conveniently the use of a pre-preg (pre-impregnated with binder matrix) fibre ply is used to facilitate layup of the device and subsequent manufacture. The at least one fibre ply may be selected from any combination of woven or nonwoven fabrics, and may be selected from any material, such as for example, carbon, glass, polymer, ceramic, silicon carbide fibres or textile fibres, and may be selected depending on the desired mechanical or physical properties of the device.

The elongate void is any opening, path, pores, through-hole, which is present in the final cured device to house the heat exchanging medium. Preferably the elongate void is capable of transferring a heat exchanging fluid therethrough. The elongate void may be created by removal of a sacrificial template, insertion of at least one elongate hollow member, such as, for example a tube, insertion of a structural lattice within said device or may be formed by the inclusion i.e. encapsulation of the static heat exchanging medium within the device.

The sacrificial template may be selected from any material which is substantially inert to the material and the cure process, and further, can be readily removed to leave an elongate void within the final cured device. In one arrangement the sacrificial template may be impregnated into the fibres of the at least one fibre ply, such that the elongate void comprises part of the uncured fibre ply and any displaced binder matrix. In an alternative arrangement the sacrificial template may simply be located upon the at least one fibre ply, such that upon curing the binder, the elongate void runs through the binder matrix, rather than within the ply. A combination of sacrificial template techniques may be used. The sacrificial template may be selected from a material which may be chemically or physically removed from the final cured device, such as for example by dissolution, causing a phase change, chemically reacting, causing a change in pressure. Examples of sacrificial templates are low melt polymers, High molecular weight PEGs, paraffin waxes, sugar in the form of high viscosity solutions and pastes), rapid prototype plaster, low melt metal alloys.

As an example a sugar paste, applied thickly to a fibre ply remained in place and did not react to the binder resin or curing process. After the final cure the cured resin was subjected to hot water to simply dissolve the sugar, it was found that ultrasound expedited the dissolving of the sugar. Low melt metal alloys have been applied as a solid template, simply resting on a fibre ply. After curing, the cured composite was simply heated to the melting point of the low melt metal alloy, which was then poured out of the cured device to leave an elongate void. The removal may be further expedited by applying either positive or negative pressure.

The elongate void may be created by inserting at least one tube or more preferably a plurality of tubes which can be made to a specific diameter, shape or configuration. The tubes themselves may preferentially be fabricated from composite materials and more preferentially from the same materials system used for the surrounding composite structure. The tubes may be simple linear aligned tubes, or a more complex configuration may be made, such that each panel has a labyrinthine path of tubes to provide maximum heat transfer. The at least one tube may be filed with static heat exchanging medium or may be used to transfer a dynamic heat exchanging fluid.

In a further arrangement the composite further comprises at least one structural lattice encapsulated by at least two fibre plys, wherein said plys are encapsulated in a binder matrix. The structural lattice may be filed with static heat exchanging medium or may be used to transfer a dynamic heat exchanging fluid. The pores or cavities allow a dynamic medium i.e. a heat exchanging fluid to be flowed therethrough. Alternatively a static heat exchanger medium may be preloaded in the structural lattice, prior to lay up of the device.

The structural lattice may be a macro scale lattice, i.e. with manufactured pores, which can be selected i.e. configured to provide a path through which the heat exchanging fluid may be transferred. Alternatively the structural lattice may be a microporous material, typically one which has its pores provided by means of a chemical reaction. The void volumes will be very large, which may require higher pressures to transfer the heat exchanging fluids. The walls of the structural lattice or microporous material may be coated with a static heat exchanging medium.

The device, particularly a structural panel, when charged with a heat exchanging fluid may have at least two fluidic ports, which form termini for the elongate voids, which allows the inflow and outflow of the heat exchanging fluid from within the device. The fluidic ports may provide facile connection between adjacent devices. In an alternative arrangement the elongate voids of adjacent devices may simply be abutted together to allow the heat exchanging fluid to transfer between devices. The at least two fluidic ports may be used to charge the elongate void with a static heat exchanging medium under forcing conditions, such as, for example, increased pressure and temperature.

FRPCs are poor thermal conductors and so localised heating or cooling may be difficult to dissipate with only the heat exchanging medium being in contact with the localised heated/cooled region. It may be desirable to dissipate the thermal imbalance across a greater area of the device. In a preferred arrangement the device may comprise at least one layer of a thermally conductive material encapsulated within said lattice. The thermally conductive material may transfer any localised thermal imbalance in the device and spread it more evenly across the device; thus allowing for more efficient cooling or heating of the device. The layer of the thermally conductive material may be selected from a metal foil, metal mesh, metallic powders, carbon powder such as for example nanotubes, graphene, alumina, metallised fibre ply, or any layer of deposed thermally conductive material. The use of a metal mesh allows the binder matrix to percolate or infiltrate through the mesh to improve adhesion of the final polymer composite. The layer of the thermally conductive material may be smaller or substantially the same size as the at least one fibre ply.

The device comprise at least one thermally non-conductive layer to prevent thermal transfer to a surface of the device. Where the device is a panel of a vehicle vessel or craft, where a first surface is on the exterior of the panel and the second surface is an interior surface, the first surface may be facing the thermal hazard, such as, for example the exterior of the vehicle, and the second surface may be facing the interior of the vehicle. If the panel is attempting to transfer heat away from itself, to an adjacent panel or further heat exchanger it will be undesirable for the panel to dissipate heat through its second surface, i.e. into the cabin, therefore the composite has a first surface through which heat is to be transferred, and a second surface which is to be substantially non-heat transferring, the device comprises at least one thermally non-conductive layer to prevent thermal transfer to a surface of the device, and is located between the at least one elongate void and said second surface. This may reduce heat transfer from the heat exchanging medium, within the elongate void to the second surface.

The at least one thermally non-conductive layer may be selected from any thermally insulative material, such as, for example, polymers, (epoxy), preferably porous or foamed polymers, glass flakes, powders or microspheres.

According to a further aspect of the invention there is provided a heat exchanger system comprising at least one device according to the invention wherein the at least one elongate void is operatively connected to a second heat exchanger, a heat exchanging fluid caused to flow therebetween, wherein said second heat exchanger alters the temperature of said heat exchanging fluid. The second heat exchanger may simply be a further panel according to the invention, or a conventional heat exchanger.

According to a further aspect of the invention there is provided a method of manufacturing a device, including the steps of
providing at least one fibre ply, comprising at least one sacrificial template in the pattern of an at least one elongate void,
providing a binder matrix, and curing said binder matrix to form a fibre reinforced polymer composite,
causing removal of said sacrificial template, so as to provide a device with at least one elongate void. The use of a pre-preg fibre ply may be used in place of a separate ply and binder matrix.

According to a further aspect of the invention there is provided a method of manufacturing a device, including the steps of
providing at least two fibre plys,
providing a structural lattice or at least one tube, and encapsulating within said at least two fibre plys,
providing a binder matrix, and curing said binder matrix, to form a fibre reinforced polymer composite,
such that said structural lattice or at least one tube provides the device with at least one elongate void. The use of a pre-preg fibre ply may be used in place of a separate ply and binder matrix.

According to a yet further aspect of the invention there is provided a method of manufacturing a device, including the steps of
providing at least one elongate void in a device, as defined herein, charging said elongate void with at least one solid heat exchanger medium. The elongate void may be charged with the solid medium before the final device is cured or after the device has been formed and cured.

According to a further aspect of the invention there is provided a structural panel on a vehicle vessel or craft comprising at least one structural device according to the invention.

A particular application of the structural heat exchanger device is seen as providing both structure and transfer of heat in vehicles, vessels or crafts. The heat exchanger used in this way will work well when positioned on the aircraft wings, which can be used to dissipate heat from a different part of the craft, in flight. The risk of icing during flight may be mitigated by providing heat to the wings, to prevent ice crystal formation.

Devices according to the invention may be used in new designs or to replace worn, damaged or outdated parts of any items which have previously been manufactured from a metallic material. For example, vehicles, whether land, air, space or water born, may have parts manufactured with integrated heat exchangers in the panel to transfer heat or cooling around the vehicle. Conveniently, where the device is used to replace a panel on an existing body, vehicle, vessel or craft, the device may preferably be engineered to the same dimensions as the original panel.

Further potential uses on vehicles may include body panels on hybrid or electric drive vehicles where the devices of the invention can be used to save weight and bulk, compared to conventional devices. Such devices may also find use on free flooding hydrodynamic hulls of, say, submersible remotely operated vehicles. The devices would be especially useful on any vehicle where weight or bulk was at a premium like an aircraft or a satellite. On a satellite the saving in space and bulk of devices according to the invention which could be used to transfer heat or cooling to various systems and may extend service life of the satellite substantially.

Of potential great importance would be the use of devices according to the invention in electrical or electronic equipment, in particular portable equipment such as computers, personal digital assistants (PDAs), cameras and telephones. Here mountings for such equipment such as circuit boards, casings and the like could be made according to the invention which would, again, assist in cutting down the weight and bulk of such items enabling them to be lighter, smaller and possibly cheaper, owing to the reduced part count. In addition, the perennial problem of heat dissipation in portable equipment powered by batteries/supercapacitors could be alleviated by incorporating the devices in, for example, the casing of a portable computer where they could dissipate heat much more easily with the possible avoidance of the need for cooling fans.

The plurality of elongate voids may be used to store or transfer fluids around a vehicle vessel or craft.

Exemplary embodiments of the device in accordance with the invention will now be described with reference to the accompanying drawings in which:
Figures 1 a and 1b shows side views of a portion of a structural integral heat exchanging aircraft wing device.
Figure 2 shows a schematic of a single skin composite integrated heat exchanger device according to the invention.
Figure 3 shows a schematic of a FRPC with a structural lattice heat exchanger device.
Figures 4a and 4b show sacrificial templates.
Figures 5a and 5b show one arrangement for providing a layup of a heat exchanger device, in the form of a panel.
Figure 6 shows a device according to the invention with a static solid heat exchanging medium

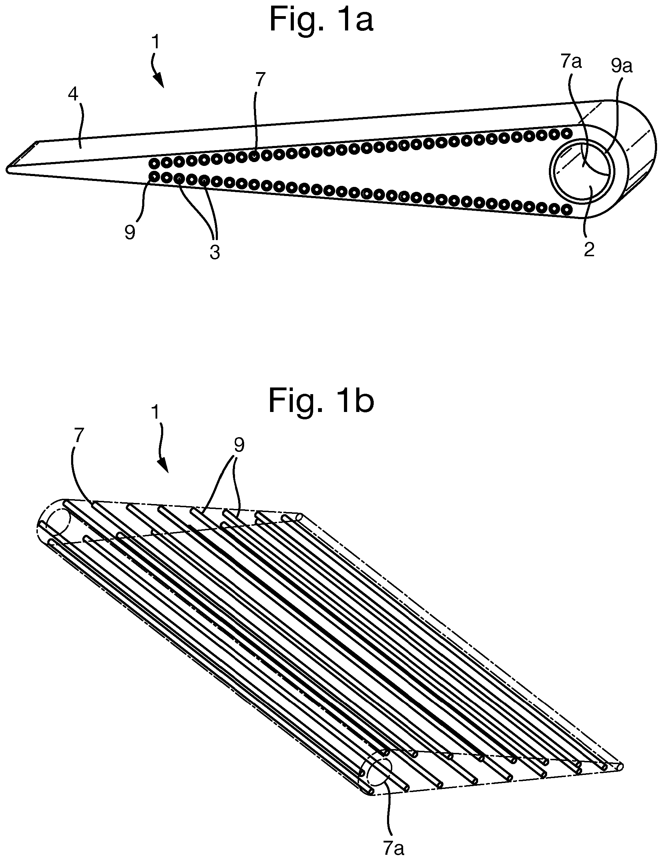

Turning to figure 1a and 1b shows a portion of an aircraft wing 1, the wing has a plurality of elongate voids 7, 7a which allow the flow of a heat exchanging fluid (not shown) to be flowed therethrough. The wing 1 is formed from a carbon fibre pre preg 4, which encapsulate a plurality of pultruded CFRP tubes 9, 9a.

The inflow 2 would be via the large diameter channel running along the leading edge. A plenum (not shown) at the far end would allow return flow 3 via the smaller diameter channels 7 running along the upper and lower surfaces of the vane.

To avoid re-heating the cooled outflow, the smaller channels 7 may not extend around the leading edge as the close proximity of the channels could effectively form a counter current heat exchanger. Alternatively a raised temperature heat exchanging fluid may be transferred via the elongate voids 7, 7a to provide de-icing of the wing 1.

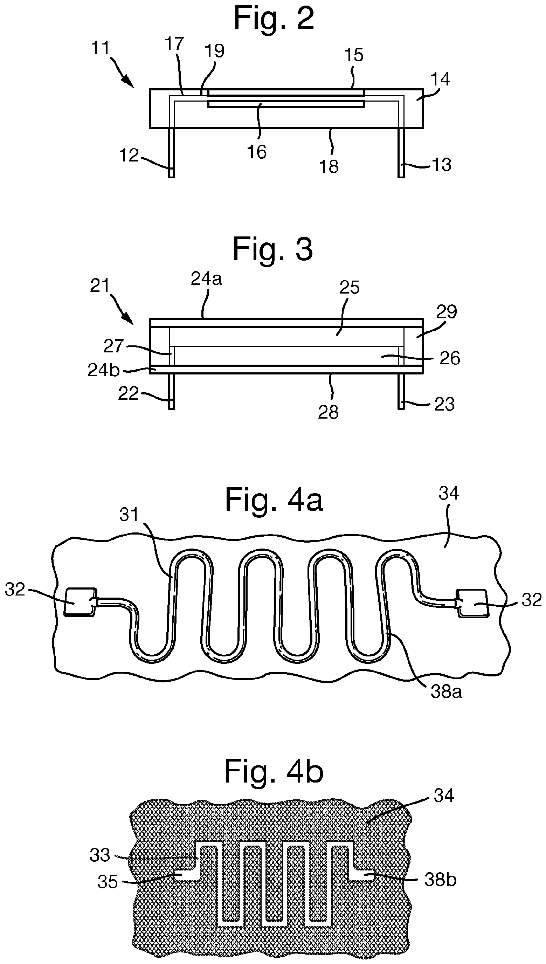

Figure 2 provides a side view schematic of a composite integrated heat exchanger device 11, which is formed from layers of fibre ply and a cured binder matrix to form a FRPC 14, the elongate void 17 runs through the FRPC 14, wherein said void is filled with a heat exchanger fluid 19. Where the device is designed to prevent icing of a wing, there is a raised temperature inflow 12 and reduced temperature outflow 13. A thermally conductive layer 15 which may be a layer of metallised fabric, or a metal foil or mesh, will allow the rapid conduction of heat, such that it is more evenly dissipated across the entire FRPC 14. In the heat exchanger 11, there is thermally non-conductive layer 16 which prevents the heat from migrating towards the second surface 18 of the heat exchanger.

Figure 3 provides a side view schematic of heat exchanger 21, comprising two FRPC skins 24a, 24b which encapsulate a structural lattice 29. The elongate void 27 is formed within the structural lattice 29. The elongate void has an inflow 22 and outflow 23 to provide either a means of heating or cooling of the heat exchanger 21. A thermally conductive layer 25 which may be a layer of metallised fabric, or a metal foil, will allow the rapid conduction of heat, such that it is more evenly dissipated across the entire lattice 29 and skins 24a, 24b. Additionally, there is thermally non-conductive layer 26 which prevents the heat from migrating towards the second surface 28 of the heat exchanger.

Figures 4a shows a sacrificial template 38a, which has been formed from a low melt metal alloy 31. The sacrificial template 38a is simply placed on a fibre ply 34 and the end portions 32 will form the inflow and outflow for the heat exchanging fluid within the final formed heat exchanger. The ply or plys are laid up and formed into a final device, and removal of the low melt metal alloy is afforded by heating it to its melting point, such that it may be poured out of the FRPC heat exchanger to leave an elongate void. Figure 4b shows an alternative sacrificial template 38b which is impregnated into a fibre ply. A sugar paste 33 is applied on top of and impregnated into the fibre ply. After the fibre ply has been formed into the final device, the sugar paste 33 is removed by passing hot water through the inflow or outflow ports formed by end points 35, so as to dissolve the sugar paste 33, to leave an elongate void in the final heat exchanger.

Clearly the sacrificial templates have been shown as simple serpentine paths, more intricate flow patterns to maximise thermal transfer would be envisaged.

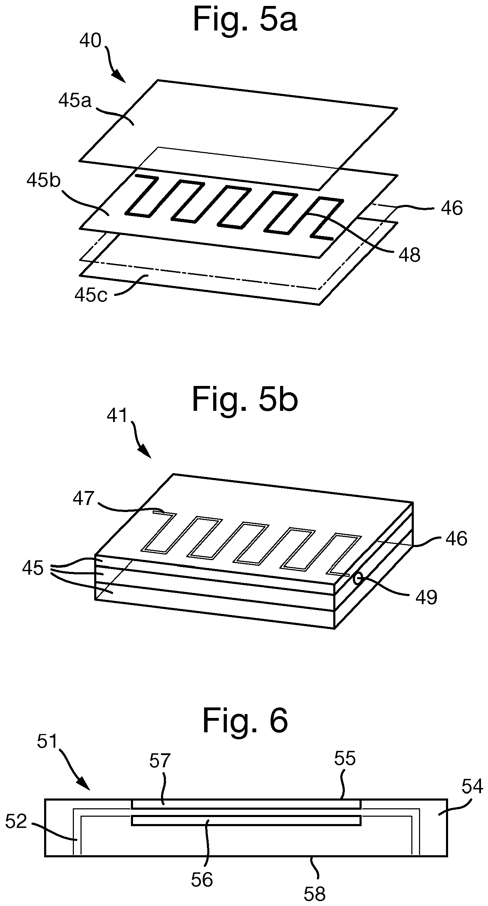

Figure 5a and 5b show the formation of a simple heat exchanger 41, three FRPC pre-preg layers 45a-c provide the component parts 40 of a final heat exchanger 41. Layer 45b is provided with a sacrificial template 48, which may be of the type shown in figures 4a or 4b. Optionally there is a thermally conductive layer 46 which is provided to improve dissipation of heat across the entire heat exchanger 40. The three layers 45a-c and the thermally conductive layer 46 are formed into a final cured heat exchanger 41. FRPC manufacture technics are well known, and may comprise the use of dry fibre plys and a resin, or pre-preg fibre ply layers.

Figure 5b shows the final cured heat exchanger 41, wherein the FRPC layers 45 are a consolidated matrix of binder and plys. The sacrificial template 48 has been removed, as previously discussed in relation to figures 4a and 4b, to leave an elongate void 47 (dotted line). The fluidic port 49 provides a terminus to connect the heat exchanger to either other panels that are also heat exchangers or to tubing and further secondary heat exchangers.

Figure 6 provides a schematic of a heat exchanger 51, which is formed from layers of a fibre ply and a binder matrix to form a FRPC 54, the elongate void 57 runs through the FRPC 54. The elongate void is charged with a static solid heat exchanging medium 52, such as a wax, which as it melts takes in heat from the surroundings. A thermally conductive layer 55, which may be a layer of metallised fabric, or a metal foil or mesh, allows the rapid conduction of heat, such that it is more evenly dissipated across the entire FRPC 54. The heat exchanger 51, also contains thermally non-conductive layer 56 which prevents the heat from migrating towards the second surface 58 of the heat exchanger.

The layers are not necessarily planar. Non-planar configurations may be employed, for example, to provide a curved or even a generally tubular device structure, or to provide devices which can be shaped to any currently existing shaped panel. The structures of the invention are well suited for such configurations.

The device may be used to replace structural panels on a vehicle vessel or craft, to transfer heat around a composite structure.

## Claims

1. A composite integrated heat exchanger device (11) comprising at least one fibre ply, wherein said ply is substantially encapsulated in a cured binder matrix to form a fibre reinforced polymer composite (14), wherein said device (11) comprises at least one elongate void (17) which comprises at least one heat exchanging medium, wherein the fibre reinforced polymer composite (14) has a first surface through which heat is to be transferred,
**characterized in that** said device (11) further comprises a second surface (18) which is to be substantially non heat transferring, further comprising at least one thermally non-conductive layer (16) located between the at least one elongate void (17) and said second surface (18).

2. A device according to claim 1, wherein the heat exchanging medium is a heat exchanging fluid which is capable of being flowed through said at least one elongate void (17).

3. A device according to claim 1 or claim 2, wherein the elongate void (17) is created by removal of a sacrificial template (38a), insertion of at least one elongate hollow member, or a structural lattice within said device.

4. A device according to claim 3 wherein the sacrificial template (38b) is impregnated into the fibres of the fibre ply.

5. A device according to claim 3 wherein the sacrificial template (38a) is located upon the at least one fibre ply (34).

6. A device according to any one of claims 3 to 5 wherein the sacrificial template (38a, 38b) is selected from a material which may be chemically or physically removed from the final cured device.

7. A device according to claim 6, wherein the removal of the sacrificial template (38a, 38b) is selected from: dissolution, causing a phase change, chemically reacting, causing a change in pressure.

8. A device according to claim 3 wherein the fibre reinforced polymer composite (14) further comprises at least one structural lattice (29) encapsulated by at least two fibre plys, wherein said plys are encapsulated in a binder matrix, such that the heat exchanging fluid may flow through said structural lattice (29).

9. A device according to any one of the claims 3, 8 wherein the device comprises at least one layer of a thermally conductive material encapsulated within said structural lattice (29).

10. A heat exchanging system comprising at least one device according to any one of the preceding claims wherein the at least one elongate void (17) is operatively connected to a second heat exchanger, a heat exchanging fluid is caused to flow therebetween, wherein said second heat exchanger alters the temperature of said heat exchanging fluid.

11. A method of manufacturing a device according to any one of claims 3-7, including the steps of providing at least one fibre ply, comprising at least one sacrificial template (38a) in the pattern of an at least one elongate void (17), providing a binder matrix, and curing said binder matrix, causing removal of said sacrificial template (38a), so provide a device with at least one elongate void (17).

12. A method of manufacturing a device according to any one of claims 3, 8, 9, including the steps of providing at least two fibre plys,
providing a structural lattice (29) or at least one hollow member, and encapsulating within said at least two fibre plys,
providing a binder matrix, and curing said binder matrix, such that said structural lattice (29) or at least one hollow member provides the device with at least one elongate void (27).

13. A structural panel on a vehicle vessel or craft comprising at least one device according to any one of claims 1-9.

## Patentansprüche

1. Integrierte Verbundwärmetauschervorrichtung (11), die wenigstens eine Faserlage umfasst, wobei die Lage im Wesentlichen in einer gehärteten Bindemittelmatrix eingekapselt ist, um einen faserverstärkten Polymerverbundstoff (14) zu bilden, wobei die Vorrichtung (11) wenigstens einen länglichen Hohlraum (17) umfasst, der wenigstens ein Wärmetauschermedium umfasst, wobei der faserverstärkte Polymerverbundstoff (14) eine erste Oberfläche zur Übertragung von Wärme aufweist,
**dadurch gekennzeichnet, dass** die Vorrichtung (11) ferner eine zweite Oberfläche (18) umfasst, die im Wesentlichen keine Wärme überträgt, ferner umfassend wenigstens eine thermisch nicht leitende Schicht (16), die zwischen dem wenigstens einen länglichen Hohlraum (17) und der zweiten Oberfläche (18) angeordnet ist.

2. Vorrichtung nach Anspruch 1, wobei das Wärmetauschermedium ein Wärmetauscherfluid ist, das durch den wenigstens einen länglichen Hohlraum (17) geleitet werden kann.

3. Vorrichtung nach Anspruch 1 oder Anspruch 2, wobei der längliche Hohlraum (17) durch Entfernung einer Opferschablone (38a), Einführen wenigstens eines länglichen hohlen Elements oder ein Strukturgitter innerhalb der Vorrichtung erzeugt wird.

4. Vorrichtung nach Anspruch 3, wobei die Opferschablone (38b) in die Fasern der Faserlage imprägniert ist.

5. Vorrichtung nach Anspruch 3, wobei die Opferschablone (38a) auf der wenigstens einen Faserlage (34) angeordnet ist.

6. Vorrichtung nach einem der Ansprüche 3 bis 5, wobei die Opferschablone (38a, 38b) aus einem Material ausgewählt wird, das chemisch oder physikalisch von der endgültigen gehärteten Vorrichtung entfernt werden kann.

7. Vorrichtung nach Anspruch 6, wobei die Entfernung der Opferschablone (38a, 38b) unter Folgenden ausgewählt wird:
Auflösung, Verursachen einer Phasenänderung, chemische Reaktion, Verursachen einer Druckänderung.

8. Vorrichtung nach Anspruch 3, wobei der faserverstärkte Verbundstoff (14) ferner wenigstens ein Strukturgitter (29) umfasst, das von wenigstens zwei Faserlagen eingekapselt wird, wobei die Lagen in einer Bindemittelmatrix eingekapselt sind, so dass das Wärmetauscherfluid durch das Strukturgitter (29) fließen kann.

9. Vorrichtung nach einem der Ansprüche 3, 8, wobei die Vorrichtung wenigstens eine Schicht aus einem thermisch leitfähigen Material umfasst, das im Strukturgitter (29) eingekapselt ist.

10. Wärmetauschersystem, umfassend wenigstens eine Vorrichtung nach einem der vorhergehenden Ansprüche, wobei der wenigstens eine längliche Hohlraum (17) mit einem zweiten Wärmetauscher in Betriebsverbindung steht, wobei verursacht wird, dass ein Wärmetauscherfluid dazwischen fließt, wobei der zweite Wärmetauscher die Temperatur des Wärmetauscherfluids verändert.

11. Verfahren zur Herstellung einer Vorrichtung nach einem der Ansprüche 3-7, umfassend die Schritte des Bereitstellens wenigstens einer Faserlage, umfassend wenigstens eine Opferschablone (38a) in dem Muster wenigstens eines länglichen Hohlraums (17),
des Bereitstellens einer Bindemittelmatrix und des Härtens der Bindemittelmatrix,
des Verursachens der Entfernung der Opferschablone (38a), um so eine Vorrichtung mit wenigstens einem länglichen Hohlraum (17) bereitzustellen.

12. Verfahren zur Herstellung einer Vorrichtung nach einem der Ansprüche 3, 8, 9, umfassend die Schritte
des Bereitstellens von wenigstens zwei Faserlagen,
des Bereitstellens eines Strukturgitters (29) oder wenigstens eines hohlen Elements, und des Einkapselns in den wenigstens zwei Faserlagen,
des Bereitstellens einer Bindemittelmatrix und des Härtens der Bindemittelmatrix, so dass das Strukturgitter (29) oder wenigstens ein hohles Element die Vorrichtung mit wenigstens einem länglichen Hohlraum (27) ausstattet.

13. Strukturplatte auf einem Wasserfahrzeug oder Flugzeug, umfassend wenigstens eine Vorrichtung nach einem der Ansprüche 1-9.

## Revendications

1. Dispositif échangeur de chaleur composite intégré (11) comprenant au moins une épaisseur de fibres, dans lequel ladite épaisseur est sensiblement encapsulée dans une matrice de liant durcie pour former un composite polymère renforcé par des fibres (14), ledit dispositif (11) comprenant au moins un vide allongé (17) qui comprend au moins un milieu échangeur de chaleur, le composite polymère renforcé par des fibres (14) ayant une première surface à travers laquelle de la chaleur doit être transférée, **caractérisé en ce que** ledit dispositif (11) comprend en outre une deuxième surface (18) qui ne doit pratiquement pas transférer de chaleur, comprenant en outre au moins une couche non thermiquement conductrice située entre ledit au moins un vide allongé (17) et ladite deuxième surface (18).

2. Dispositif selon la revendication 1, dans lequel le milieu échangeur de chaleur est un fluide échangeur de chaleur que l'on peut faire circuler à travers ledit au moins un vide allongé (17).

3. Dispositif selon la revendication 1 ou la revendication 2, dans lequel le vide allongé (17) est créé par élimination d'un gabarit sacrificiel (38a), et insertion d'au moins un élément creux allongé, ou d'un treillis structural, dans ledit dispositif.

4. Dispositif selon la revendication 3, dans lequel le gabarit sacrificiel (38b) est introduit par imprégnation dans les fibres de l'épaisseur de fibres.

5. Dispositif selon la revendication 3, dans lequel le gabarit sacrificiel (38a) est situé sur ladite au moins une épaisseur de fibres (34).

6. Dispositif selon l'une quelconque des revendications 3 à 5, dans lequel le gabarit sacrificiel (38a, 38b) est sélectionné parmi un matériau qui peut être enlevé par un procédé chimique ou qui peut être enlevé physiquement du dispositif durci final.

7. Dispositif selon la revendication 6, dans lequel l'élimination du gabarit sacrificiel (38a, 38b) est sélectionnée parmi une dissolution, la provocation d'un changement de phase, une réaction chimique, et la provocation d'un changement de pression.

8. Dispositif selon la revendication 3, dans lequel le composite polymère renforcé par des fibres (14) comprend en outre au moins un treillis structural (29) encapsulé par au moins deux épaisseurs de fibres, lesdites épaisseurs étant encapsulées dans une matrice de liant, de telle sorte que le fluide échangeur de chaleur puisse circuler à travers ledit treillis structural (29).

9. Dispositif selon l'une quelconque des revendications 3, 8, le dispositif comprenant au moins une couche d'un matériau thermiquement conducteur encapsulée dans ledit treillis structural (29).

10. Système échangeur de chaleur comprenant au moins un dispositif selon l'une quelconque des revendications précédentes, dans lequel ledit au moins un vide allongé (17) est fonctionnellement connecté à un deuxième échangeur de chaleur, et on fait circuler un fluide échangeur de chaleur entre ces éléments, ledit deuxième échangeur de chaleur changeant la température dudit fluide échangeur de chaleur.

11. Procédé de fabrication d'un dispositif selon l'une quelconque des revendications 3 à 7, comprenant les étapes qui consistent à :
fournir au moins une épaisseur de fibres, comprenant au moins un gabarit sacrificiel (38a) sous la forme d'au moins un vide allongé (17),
fournir une matrice de liant, et durcir ladite matrice de liant,
provoquer l'élimination dudit gabarit sacrificiel (38a),
en produisant de ce fait un dispositif pourvu d'au moins un vide allongé (17).

12. Procédé de fabrication d'un dispositif selon l'une quelconque des revendications 3, 8, 9, comprenant les étapes qui consistent à :
fournir au moins deux épaisseurs de fibres,
fournir un treillis structural (29) ou au moins un élément creux, et l'encapsuler dans lesdites au moins deux épaisseurs de fibres,
fournir une matrice de liant, et durcir ladite matrice de liant,
de telle sorte que ledit treillis structural (29) ou au moins un élément creux pourvoie le dispositif d'au moins un vide allongé (27).

13. Panneau structural situé sur un véhicule, un navire ou un aéronef, comprenant au moins un dispositif selon l'une quelconque des revendications 1 à 9.
